# EUROPEAN PATENT APPLICATION

(11) **EP 3 311 673 A1**
(43) Date of publication of application: **25.04.2018**
(21) Application number: 17474003.5
(22) Date of filing: 18.09.2017
(51) Int. Cl.: A23C 9/12, A23C 9/152, A23L 33/135, A23C 9/123, A23C 9/127

(54) **PRODUCTION METHOD FOR REGION'S NATURAL PROBIOTIC MICROFLORA ENRICHED COW'S MILK**

(30) Priority: 29.09.2016 SK 862016
(71) Applicant: Labas, Miroslav, 040 01 Kosice (SK)
(72) Inventor: Labas, Miroslav, 040 01 Kosice (SK)
(74) Representative: Vasil, Martin

(57) **Abstract**

It describes a method for region's natural probiotic microflora enriched cow's milk, enabling enrichment of the milk with selected probiotic cultures typical for certain region in addition to the traditional pasteurization of the cow's milk.

## Description

### Name of invention

Production method for region's natural probiotic microflora enriched cow's milk

### Field of technology

In general, this invention relates to the production method for cow's milk enriched with natural probiotic microflora of the region, i.e. supplemented with selected probiotic cultures after pasteurization.

### Background of the invention

Currently, drinking milk is made of cow's milk and labeled as "drinking milk". Drinking milk is a source of biologically active substances necessary for healthy development of human and these substances include:
- The nutritive and building substances for body structure and child's growth;
- The substances for energy provision necessary for organism existence;
- The mineral substances, vitamins, hormones and enzymes;
- The essential elements that cannot be synthetized by organism.

Drinking milk contains the milk fat, milk sugar - lactose, milk proteins and mineral substances with calcium being the most important one. Majority of drinking milk is produced through a dairy treatment of the raw cow's milk that includes a sequence of technological procedures, such as cleaning, skimming, thermal treatment (pasteurization), homogenization, cooling and packing. The individual market types of drinking milk depend on technological procedures and methods used for drinking milk production.

Dairy cattle itself is producing milk without any microorganism thanks to the alveoli present in the mammary glands. However, milk is contaminated (primary contamination) in the udder itself, so a certain volume of non-pathogenic microflora can be considered a physiological contamination. So called mesophilic bacteria resulting from milk fermentation in the coccal and block forms present the most important part of these microorganisms in milk. These forms are further divided into homofermentative (lactose fermentation to lactic acid) and heterofermentative components (in addition to lactic acid, these components ferment lactose to the additional components, such as butyric acid and ethanol). The coccal forms include especially the Streptococcus genus with homoenzymic bacteria S. lactis and Leuconostoc genus with s heteroenzymic bacteria L. cremoris and L. dextranicum. The block forms of the milk fermentation belong to the Lactobacillus genus. The L. lactis, L. bulgaricus, L. acidophilus, L. helveticus, L. casei and L. delbrueckii are the most important homoenzymic bacteria and L. fermentum and L. brevis are the most important heteroenzymic bacteria.

A secondary milk contamination resulting from milking and milk treatment and storage of insufficiently cooled milk present the majority share of microorganisms in milk. It is estimated that milk contamination during milking is 10-times higher than physiological contamination in the udder and additional 10-times contamination is caused by milk treatment. A very serious contamination of milk results from common contamination of stables. Activities of these microorganisms are affecting not only a health hazard but also a technological treatment of milk. An undesirable milk microflora often consists of enterobacteria such as Escherichia and Enterobacter (Escherichia coli, Enterobacter aerogenes), together with butyric fermentation bacteria (e.g. Clostridium butyricum) and proteolytic bacteria (Bacillus subtilis, B mycoides). In addition, various yeasts and yestlike microorganisms (e.g. Saccharomyces, Candida genus) and other microorganisms can be present. Thanks to current advanced cooling equipment used in the milk acquisition and processing steps, the psychrotrophic microorganisms present the most important part of these groups as these microorganisms are able to reproduce at low storage temperatures (approx. 5°C). These microorganisms can be easily destructed by pasteurization, however they produce the lipase and protease enzymes that can cause flaws in the milk product taste as they split the milk components and preserve their activity after pasteurization. The most important types of psychrotrophic microorganisms include: Pseudomonas, Alcaligenes, Flavobacterium, Lactobacillus, Steptococcus Staphylococcus, Micrococcus and others.

Immediately after milking, milk contains from few hundred up to few thousand of microorganisms in 1 ml, 90% of them being of external origin. These microorganisms include especially bacteria and much lower portion of yeasts and filamentous funguses together with pathogenic microbes requiring introduction of so called milk pasteurization.

The milk itself is perfect and most natural drink. It contains the most valuable animal proteins, easily digestable fat and numerous important mineral substances. In addition, milk contains a large number of essential amino-acids, vitamins, milk sugar and numerous trace elements, necessary for nutrition and human organism development ensuring a normal function of metabolism and human health protection. Versatility of milk in nutrition is also demonstrated by total daily consumption of substances needed for life settled by adult from 1 liter of milk: 40% of proteins, 32% of fat, 12% of sugar, up to 120% of calcium, 67% of phosphorus, 30% of vitamin A, 25% of vitamin B and 70% of vitamin B 2.

Due to modern and durable food with high content of chemistry, a need of original probiotic microflora enriched milk rapidly grows, as such content can help to establish a microbial balance in the human digestive tract and improve population immunity.

### Summary of the invention

Raw cow's milk is milked exclusively from healthy dairy cattle raised in the Central and East Slovak Region.

### Procedure

### Part 1

Procedure for raw cow's milk treatment and handling
- Raw milk after milking shall be treated, cleared of mechanic contamination (straining, filtering, skimming) and cooled down within 150 minutes from the beginning of milking. In addition, milk shall be stored at 4 - 6°C till transportation to the dairy works. Milk is mixed during storage in the cooling facility to avoid creation and freezing of top cream on the walls of the cooling facility.

### Part 2

Milk is daily transported from the larger collection points and every 2 days from smaller facilities in the special tanks. Each transport of milk from the agricultural plant shall be monitored by a dairy works employee checking the milk quality and quantity during sampling (temperature, acidity, smell). Every day, a sample is taken from supplied milk in the dairy works. Detailed analysis and quality classification of the milk is carried out by independent certified central laboratories at least every two weeks. The above procedure is in compliance with Decree of the Ministry of Agriculture of the Slovak Republic that is harmonized with European requirements and EU Directives 92/46.

The quality indicators of milk are determined as follows:
Min. fat content - 38g/liter
Min. protein content - 32g/liter
Max. total plate count (TPC) - 50,000/ml of milk
Max. somatic cell count (SC) - 250,000/ml of milk
Inhibitory substances: negative test required
Freezing point: Freezing point shall not exceed - 0.520°C.
Active acidity indicates a hydrogen ions concentration from 6.4 to 6.8 pH.
Max. non-protein nitrogen content in the milk - 250mg/l (25mg/100ml) of milk
Max. butter bacteria spores - 1,000/liter
Milk shall be tested for probiotic microorganisms content, heavy metals content and antibiotic resistance at least once a year.

### Part 3

Thermal treatment of milk is one of the most critical technological steps in milk products production. Milk freshly milked from healthy dairy cattle with hygienic conditions observed contains a relative low number of microorganisms. Due to preventive reasons, the raw milk is thermally treated to eliminate any alimentary infections and to ensure technological suitability in production of majority of the milk-based products. Pasteurization means a process of milk heating to a high temperature for a short time, at least 71.7°C for 15 seconds or heating of milk to 85°C for several seconds. Such thermal treatment of milk results in health safety of milk, however a preservation of the majority of original physical, chemical and biological properties of the milk is required. Milk treated in this way is labeled as pasteurized milk. Next, pasteurized milk is skimmed to remove eventual and undesirable contaminants and then homogenized according to the market type of the milk.

### Part 4

As, in addition to the pathogenic microflora, pasteurization eliminates also a majority of beneficial probiotic microflora, an adequate mixture of selected probiotic cultures typical for given region shall be added, with maximum number of live organisms 5 x 10⁶ (5 millions) of live organisms per ml of milk, containing at least 2 strains of homofermentative bacteria (fermentation of lactose to lactic acid) and at least 2 strains of homoenzymic bacteria. Date of expiry and storage method shall be determined according to the quantity of culture added.

### Examples of invention implementation

The present invention "Production method for region's natural probiotic microflora enriched cow's milk" can be used for production of cow's milk for human consumption, enriched with natural probiotic microflora of the region.

## Claims

1. A method of cow's milk production, enabling milk enrichment with selected probiotic cultures typical for a certain region in addition to pasteurization.
